# EUROPEAN PATENT SPECIFICATION

(11) **EP 3 377 393 B1**
(45) Date of publication and mention of the grant of the patent: **12.06.2019**
(21) Application number: 17710614.3
(22) Date of filing: 30.01.2017
(51) Int. Cl.: B62D 33/037

(54) **MANUALLY OPERATED FASTENER FOR THE SIDE BOARDS OF VEHICLE BODIES**
HANDBETÄTIGTER VERSCHLUSS FÜR DIE SEITENWÄNDE VON FAHRZEUGKAROSSERIEN
FIXATION ACTIONNÉE MANUELLEMENT POUR LES PANNEAUX LATÉRAUX DE CARROSSERIES DE VÉHICULE

(30) Priority: 04.02.2016 IT UB20160412
(43) Date of publication of application: 26.09.2018
(73) Proprietor: Scattolini S.p.A., 37067 Valeggio sul Mincio (Verona) (IT)
(72) Inventor: SCATTOLO, Michelangelo, 37067 Valeggio sul Mincio (Verona) (IT)
(74) Representative: Ponchiroli, Simone
(86) International application number: PCT/IB2017/050479
(87) International publication number: WO 2017/134550

(56) References cited:
- DE-A1-102006 043 583
- DE-U1- 29 815 650
- DE-U1-202009 001 986

## Description

This invention relates to a manually operated fastener for the side boards of vehicle bodies, designed to lock a side board in the closed position. Such a fastener is for example disclosed in DE 20 2009 001986 U1.

In particular, this invention relates to a fastener of the type that comprises a containment casing comprising an inner cavity that is elongate along a main axis of extension, usually vertical in use, in which an insert is slidably inserted, the insert being connected to a connecting element in use couplable to another connecting element that acts as a contact element.

The insert can be moved along the cavity by means of a movement unit which can be operated manually, mounted in the containment casing and accessible through a main opening made in the containment casing. In the most common embodiments, the movement unit comprises a lever pivoting at the containment casing and that, with the fastener fastened, is housed in the containment casing whilst, with the fastener open, is rotated outwards and projects relative to the containment casing (more or less depending on the embodiments).

Moreover, depending on the cases, the first connecting element may comprise either a pin extending perpendicularly to the main axis of extension and that has an enlarged and flared head, or a pin extending parallel to the main axis of extension.

In the former case, the second connecting element is U-shaped and the coupling between the two occurs according to a movement parallel to the main axis of extension so that the pin is inserted between the two arms of the U which then retain the enlarged head. In order to compensate for any play, the second contact element may be constituted of an elastically deformable metal sheet.

In contrast, in the latter case, the second connecting element is usually a recess or a hole in which the pin is inserted after a movement parallel to the main axis of extension.

However, all of these prior art technologies have several disadvantages.

First, to guarantee that the side board is fastened closed correctly, all of the parts must be made and mounted with great precision so as to avoid creating any play between the two connecting elements, which obviously increases production costs. Otherwise, even if fastened closed, the side board could tend to move relative to the rest of the vehicle body. Consequently, when the vehicle moves, every small rough patch of ground the vehicle passes over would cause the vehicle body to make troublesome noises.

Second, prior art fasteners are negatively affected by the tensions created after movement of the vehicles when the vehicle bodies undergo significant elastic deformations which tend to be discharged on connecting points and in particular on fastening units. Even the use of elastically deformable second connecting elements described above is unable to solve that problem, only allowing very limited compensation of deformations.

In this context the technical purpose which forms the basis of this invention is to provide a fastener for the side boards of vehicle bodies which overcomes the above-mentioned disadvantages.

In particular, the technical purpose of this invention is to provide a fastener for the side boards of vehicle bodies that allows optimum fastening closed to be achieved even with relatively high production tolerances.

It is also the technical purpose of this invention to provide a fastener for the side boards of vehicle bodies that is less affected than the prior art solutions by the deformations to which the vehicle body is subjected during vehicle movement.

It is also the technical purpose of this invention to provide a fastener for the side boards of vehicle bodies which makes the side boards less noisy while the vehicle is moving.

The technical purpose specified and the aims indicated are substantially achieved by a manually operated fastener for the side boards of vehicle bodies made as described in the appended claims.

Further features and the advantages of this invention are more apparent in the detailed description, with reference to the accompanying drawings which illustrate several preferred, non-limiting embodiments of a manually operated fastener for the side boards of vehicle bodies, in which:

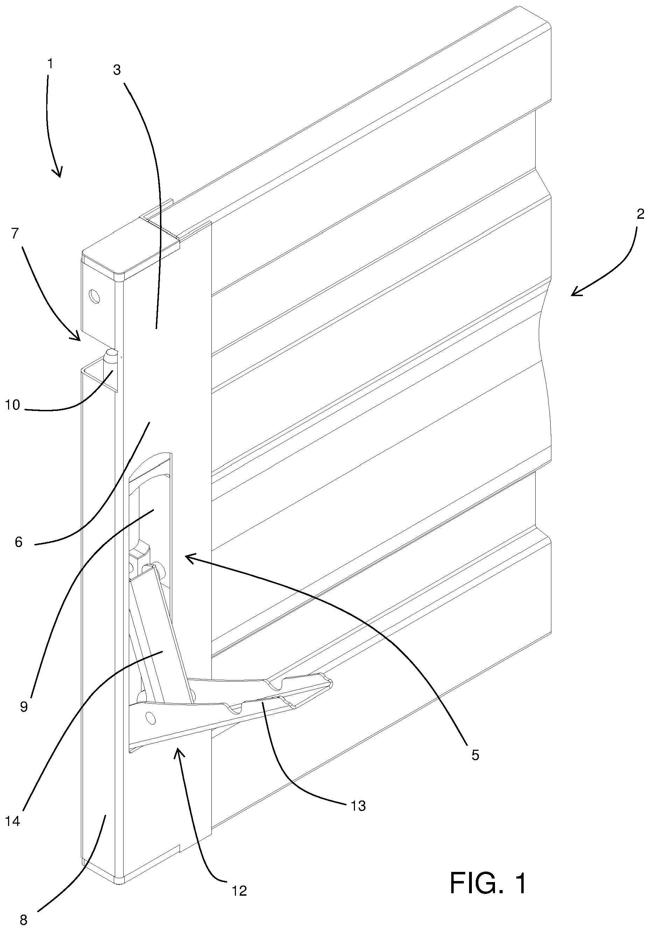

- Figure 1 is an axonometric view of a portion of a side board that comprises an end element constituted of a fastener made in accordance with a first embodiment of this invention;
- Figure 2 shows the portion of side board of Figure 1 partly transparent;

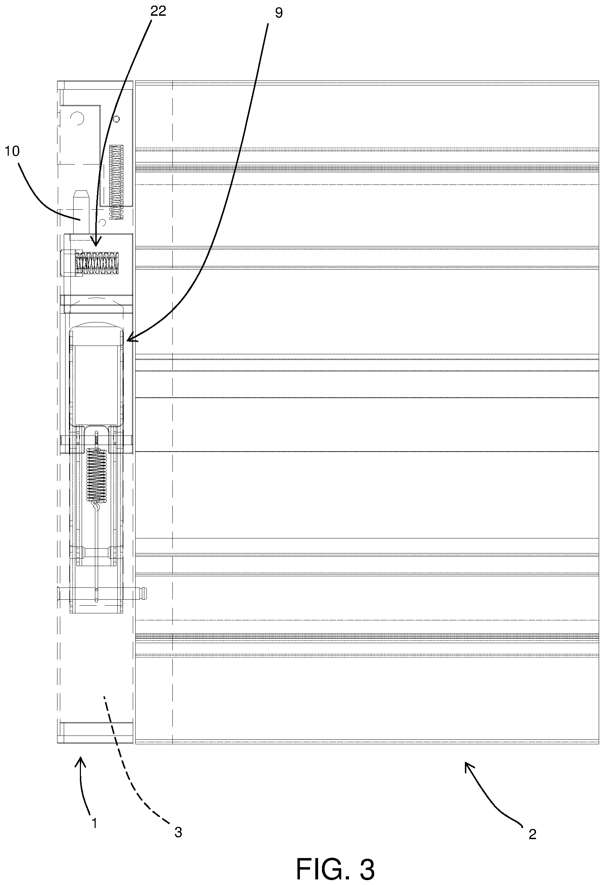

- Figure 3 is a front view of the partly transparent portion of side board of Figure 2;
- Figure 4 is a partly transparent axonometric view of a portion of a side board that comprises an end element constituted of a fastener made in accordance with a second embodiment of this invention;
- Figure 5 is a partly transparent axonometric view of a portion of a side board that comprises an end element constituted of a fastener made in accordance with a third embodiment of this invention;
- Figure 6 is a partly transparent axonometric view of a portion of a side board that comprises an end element constituted of a fastener made in accordance with a fourth embodiment of this invention;
- Figure 7 is an axonometric view, with some parts cut away to better illustrate others, of an inner part of the fastener of Figure 2;
- Figure 8 is an axonometric view, with some parts cut away to better illustrate others, of an inner part of the fastener of Figure 4;
- Figure 9 is an axonometric view, with some parts cut away to better illustrate others, of an inner part of the fastener of Figure 5;
- Figure 10 is an axonometric view, with some parts cut away to better illustrate others, of an inner part of the fastener of Figure 6; and

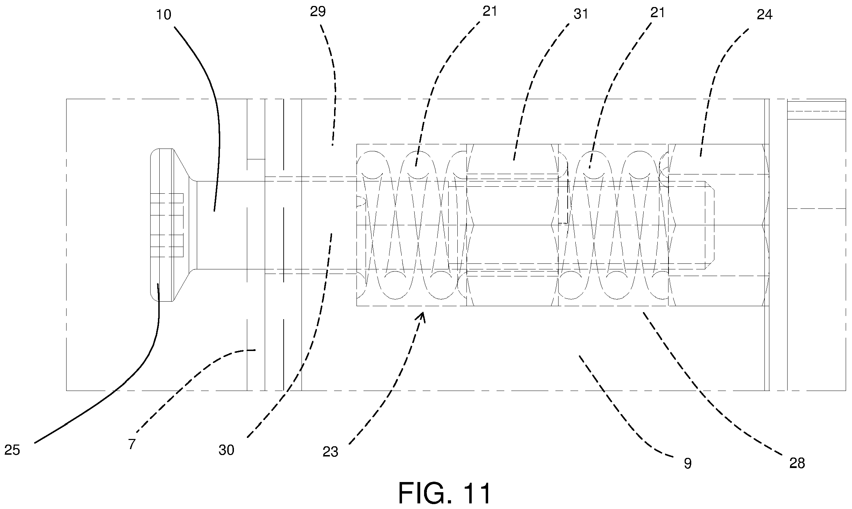

- Figure 11 is a front view of a detail of the fastener of Figure 6 and of the related inner part of Figure 10.

With reference to the accompanying drawings, the numeral 1 denotes in its entirety a manually operated fastener for the side boards 2 of vehicle bodies made according to this invention.

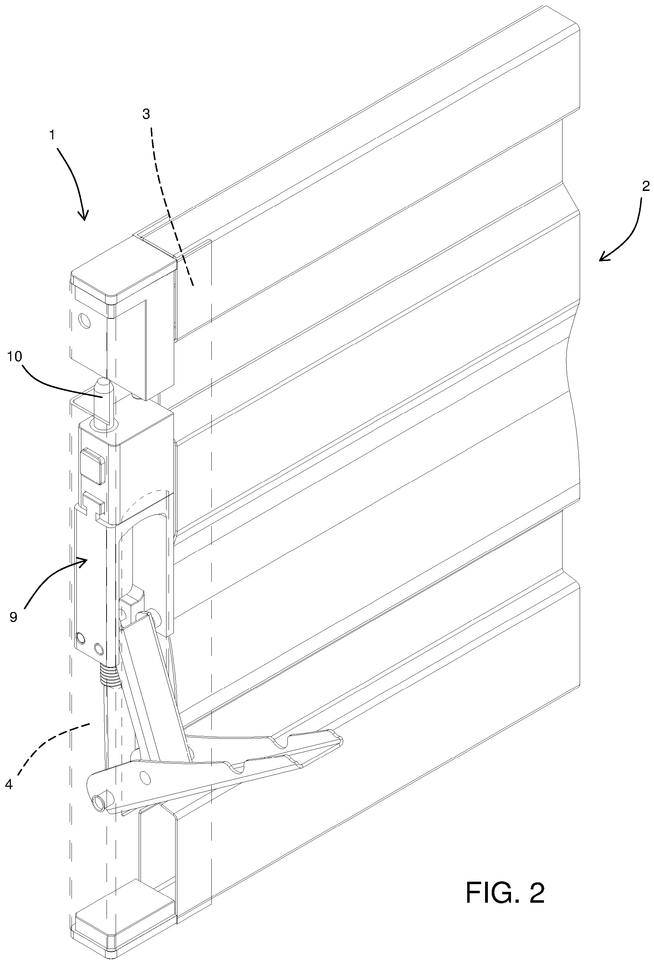

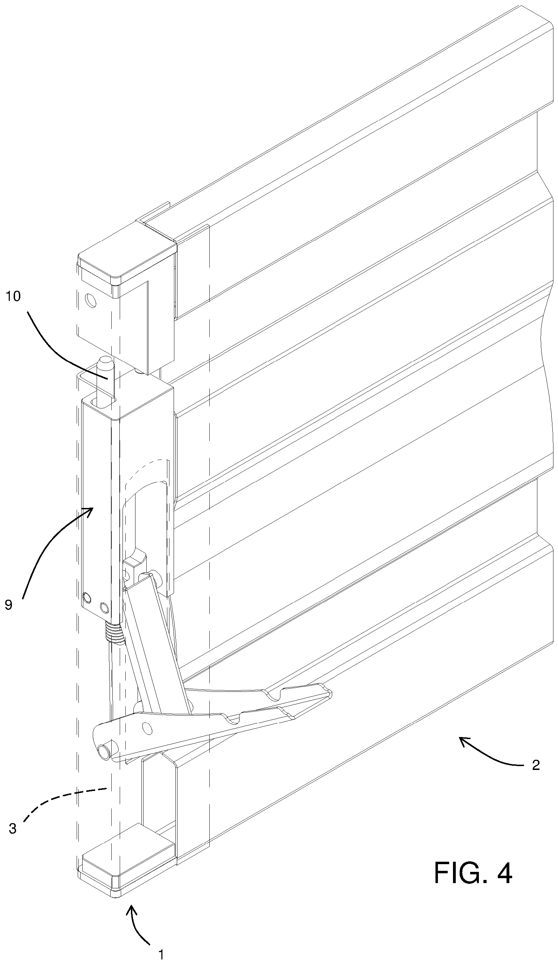

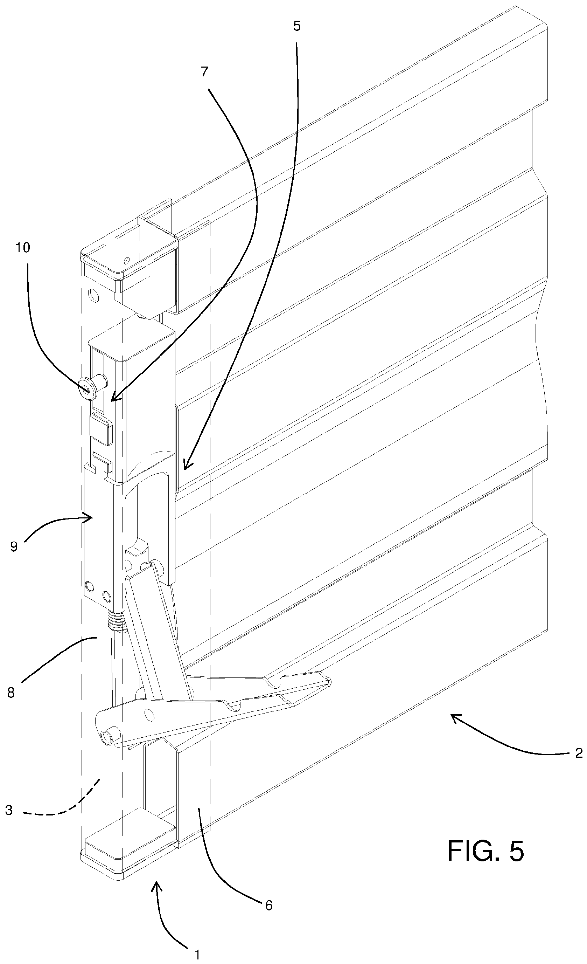

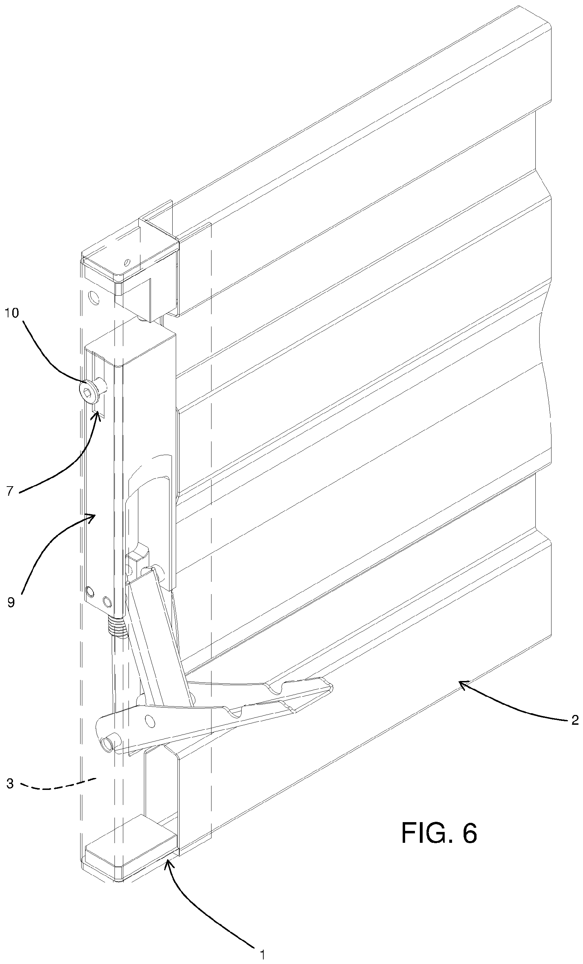

As already indicated, the fastener 1 according to this invention is of the type that comprises first a containment casing 3 having an inner cavity 4 that is elongate along a main axis of extension, and that is usually intended to be installed with the main axis of extension vertical (obviously when the vehicle body is level and the side board 2 is closed). Depending on requirements, in use the containment casing 3 may be fixed either to the openable side board 2 of the vehicle body or to another part of the vehicle body (not illustrated), that in turn may be stationary (for example, an upright) or movable (such as a different side board 2). The containment casing 3 also comprises a main opening 5 for accessing the inner cavity 4 that is made in a first face 6 of the containment casing 3, and which in turn is parallel to the main axis of extension and which in use is facing towards the outside of the vehicle body, and a secondary opening 7 for accessing the inner cavity 4, positioned transversally relative to the first face 6. Depending on the embodiments, the secondary opening 7 may either be made in a second face 8 of the containment casing 3 parallel to the main axis of extension (Figures 5 and 6), or may extend substantially perpendicularly to the main axis of extension (Figures 2 and 4), that is to say, with a main plane of extension perpendicular to said main axis of extension.

Inserted in the containment casing 3 there is an inert 9, slidably movable along the main axis of extension between a first position and a second position. At least one first connecting element 10 is connected to the insert 9 and is movable with it in such a way that when the insert 9 is in the first position the first connecting element 10 is positioned in its own locking position, and when the insert 9 is in the second position the first connecting element 10 is positioned in its own releasing position. That first connecting element 10 is positioned at the secondary opening 7 and is in use couplable to a second connecting element that is respectively fixed to the other part of the body or to the side board 2 (depending whether or not the fastener is in turn fixed to the openable side board 2 of the vehicle body or to the other part of the vehicle body). In use, when the first connecting element 10 is in the locking position and is coupled to the second connecting element, the side board 2 is fastened closed and cannot be opened except by acting on the fastener 1, whilst when the first connecting element 10 is coupled to the second connecting element but is in the releasing position, the side board 2 can be freely shifted towards its open configuration.

To allow movement (obviously in both directions) of the insert 9 between the first position and the second position, there is also a movement unit 12 that can be manually operated, mounted in the containment casing 3 and accessible through the main opening 5. Depending on requirements, the movement unit 12 may have any form: for example, it may comprise a lever 13 with elastic return that is rotatably connected to the containment casing 3 and connected to the insert 9 by means of one or more connecting rods 14 as shown in the accompanying figures, or it may be constituted of a shaped portion of the insert 9 itself.

According to the main innovative aspect of this invention, on one hand the insert 9 comprises at least a first part 15 slidably guided in the containment casing 3 so that it can move along the main axis of extension, and to which the movement unit 12 is coupled, and on the other hand the first connecting element 10 is movable relative to the first part 15 along a line of translation perpendicular to the main axis of extension, between a back position (in which in the accompanying figures it is shifted towards the centre of the side board 2) and a forward position (in which in the accompanying figures it is shifted towards the edge of the side board 2). Moreover, there are thrust means 16 acting (directly or indirectly) on the first connecting element 10 for elastically pushing it towards the back position. The first part 15 is advantageously shaped in such a way that, in all of its positions, the containment casing 3 substantially prevents it from moving transversally to the main axis of extension (in the accompanying figures it comprises a section transversal to the main axis of extension that is shaped to match that of the cavity 4).

That general structure may have various practical applications, of which the four shown in the accompanying figures are only an example.

The mobility of the first connecting element 10 relative to the first part 15 of the insert 9 may be obtained in different ways.

According to a first preferred embodiment, in particular, the insert 9 comprises a second part 17 slidably coupled to the first part 15 so that it can move relative to the latter according to the line of translation. The first connecting element 10 can be mounted on the second part 17 and fixed to it, so that sliding of the second part 17 of the insert 9 relative to the first part 15 of the insert 9 causes shifting of the first connecting element 10 between the back position and the forward position.

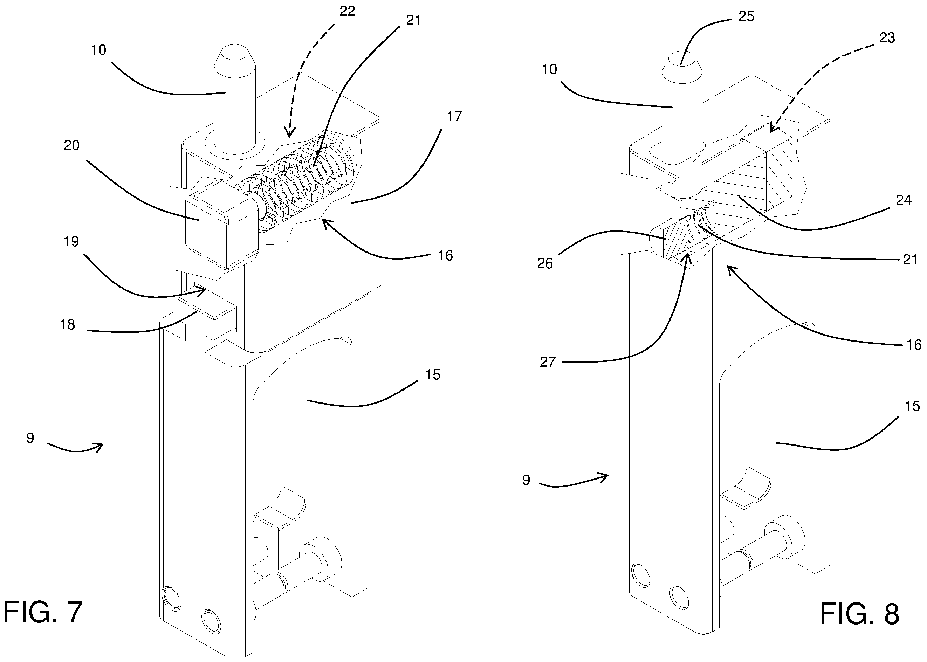

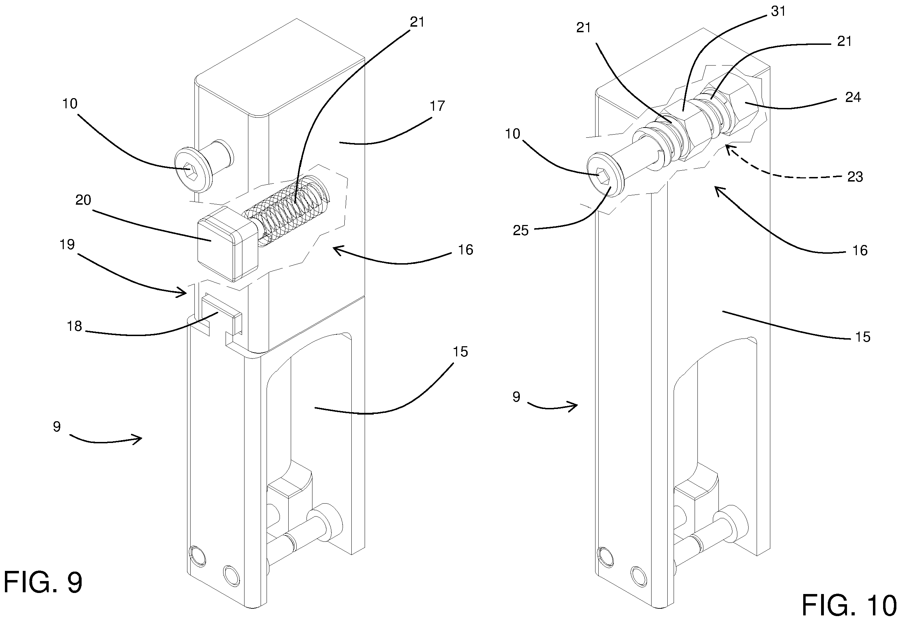

To make the connection between the first part 15 and the second part 17 of the insert 9 more stable, advantageously the second part 17 is slidably coupled to the first part 15 with at least one undercut hooked coupling, as in the accompanying Figures 7 and 9 where the first part 15 comprises a rail 18 with a T-shaped cross-section and the second part 17 comprises groove 19 shaped to match the rail 18. However, in other cases, it is also possible to use more than one rail 18, to use rails having different cross-sections, as well as associating rail 18 with the second part 17 and the groove 19 with the first part 15, just as hybrid solutions are also possible with multiple rails, some fixed to one of either the first part 15 or the second part 17 and the others to the other of either the first part 15 or the second part 17.

Advantageously, in this first embodiment the thrust means 16 also comprise a first stop element 20 positioned resting against an inner wall of the containment casing 3, and at least one thrust spring 21 positioned between the second part 17 and the first stop element 20. In the accompanying Figures 7 and 9 that is achieved by making a first blind or plugged hole 22 in the second part 17 of the insert 9 and inserting in the first blind or plugged hole 22 the thrust spring 21, in the innermost part, and the first stop element 20 at the opening of the first blind or plugged hole 22. Preferably, the first stop element 20 has a cross-section shaped to match that of the first blind or plugged hole 22, or in any case such that it is contained in said hole without any significant play in a plane perpendicular to the line of translation, as well as a length, parallel to the line of translation, that is greater than the maximum stroke of the second part 17 of the insert 9, so that it always remains inside the first blind or plugged hole 22.

In contrast, according to a second embodiment for mobility of the first connecting element 10 relative to the first part 15 of the insert 9, illustrated in Figures 8 and 10, the first part 15 comprises a guiding housing 23 elongate along the line of translation, and the first connecting element 10 comprises a base 24 slidably inserted in the guiding housing 23. The first connecting element 10 also comprises a head 25 projecting relative to the first part 15 and in use couplable to the second connecting element. Depending on requirements, the projecting head 25 may (Figure 10) or may not (Figure 8) be enlarged. Furthermore, the thrust means 16 comprise at least one thrust spring 21 positioned between the base 24 and the first part 15 or the containment casing 3.

In particular, in the embodiment of Figure 8 the thrust means 16 comprise a second stop element 26 positioned resting against an inner wall of the first part 15 (but it could also rest directly on the containment casing 3), and at least one thrust spring 21 positioned between the base 24 and the second stop element 26. In more detail, that is achieved by making a second blind or plugged hole 27 in the base 24 and inserting in the second blind or plugged hole 27 the thrust spring 21, in the innermost part, and the second stop element 26 at the opening of the second blind or plugged hole 27. Preferably, the second stop element 26 has a cross-section shaped to match that of the second blind or plugged hole 27, or in any case such that it is contained in said hole without any significant play in a plane perpendicular to the line of translation, as well as a length, parallel to the line of translation, that is greater than the maximum stroke of the base 24, so that it always remains inside the second blind or plugged hole 27.

In contrast, in another embodiment the guiding housing 23 is constituted of a third blind or plugged hole 28, perpendicular to the second face 8, through whose open end the first connecting element 10 is inserted. The third blind or plugged hole 28 is also equipped with a shoulder 29 that narrows its cross-section, is positioned at the open end and against which one end of a thrust spring 21 inserted in the blind or plugged hole acts in contact; the other end of the thrust spring 21 acts against the base 24 of the first connecting element 10 which is also positioned in the blind or plugged hole (deeper inside). The base 24 is connected to the (enlarged) projecting head 25 by a shank 30 with smaller cross-section. In the case in Figure 10, the base 24 is constituted of a first nut in which the shank 30 is screwed. Furthermore, in the embodiment in Figure 10, the thrust means 16 comprise at least two thrust springs 21 arranged axially in series and having different elastic constants, between which a second nut 31 is positioned, through which the shank 30 is free to slide. The use of two thrust springs 21 in series, which if appropriate may also be extended to all of the other embodiments, allows the elastic response of the system to differ, thereby providing a gentler response (understood in the sense of less resistance offered) as regards normal side board 2 fastening closed (in which the elastic fastening annuls any play), and a more robust response (understood in the sense of greater resistance offered) regarding stresses caused by deformations of the vehicle body.

Therefore, in light of the above, in the case of the embodiments of Figures 8 and 10, when it is in the forward position, the first connecting element 10 projects from the second face 8 more than when it is in the back position, whilst the shifting of the first connecting element between the locking position and the releasing position occurs by means of a translation along a line parallel to the second face 8.

In contrast, in the case of the embodiments of Figures 7 and 9, in the locking position the first connecting element 10 projects from the secondary opening 7 more than when it is in the releasing position, whilst the shifting of the first connecting element 10 between the forward position and the back position occurs by means of a translation along a line substantially parallel to the main plane of extension of the secondary opening 7.

This invention relates not just to the fastener itself, but also to a vehicle body comprising the fastener and to the vehicle comprising that body.

The body in general comprises first at least one openable side board 2, movable between a closed position and an open position, and equipped with an end element at a smaller side of it. Combined with the openable side board 2 there is a contact element fixed to a part of the vehicle body that is not the openable side board 2. That part of the body may be constituted of either a fixed upright, or of another side board 2, openable or fixed.

At least in the closed position of the openable side board 2, the contact element is positioned (if fixed) or positionable (if movable) adjacent to the end element of the openable side board 2.

The vehicle body also comprises at least one fastener according to this invention, which may constitute either the end element of the openable side board 2 or the contact element. Consequently, respectively the contact element or the end element comprise the second connecting element in such a way that it can be coupled to the first connecting element 10 present in the fastener.

Moreover, when the first connecting element 10 is coupled to the second connecting element, the thrust means 16 allow the shifting of the first connecting element 10 from the back position towards the forward position, for allowing movement of the end element and the contact element away from one another following deformations to which the vehicle body may be subjected during use.

This invention brings important advantages.

First, the fastener described above allows optimum fastening closed of the side board even with relatively high production tolerances which can easily be compensated by the elastic yielding of the thrust means.

Second, thanks again to that elastic yielding, the fastener is considerably less affected than prior art fasteners by the deformations to which the vehicle body is subjected during vehicle movement, which are mainly absorbed by the thrust means rather than being transferred to the rigid parts of the self-same fastener.

Not least, the fastener described above makes the side boards much less noisy than traditional fasteners of the same type during vehicle movements.

Finally, it should be noticed that this invention is relatively easy to produce and that even the cost linked to implementing the invention is not very high.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A manually operated fastener for the side boards of vehicle bodies, comprising:
a containment casing (3) in use fixable to a side board (2) of a vehicle body or to another part of the body, the containment casing (3) comprising an inner cavity (4) that is elongate along a main axis of extension and a main opening (5) for accessing the inner cavity (4) made in a first face (6) of the containment casing (3), parallel to the main axis of extension and which in use is facing towards the outside of the body, and a secondary opening (7) for accessing the inner cavity (4) positioned transversally relative to the first face (6);
an insert (9) slidably inserted in the containment casing (3), and movable along the main axis of extension between a first position and a second position;
at least one first connecting element (10) connected to the insert (9), movable with it, positioned at the secondary opening (7), and in use couplable to a second connecting element (11) that is respectively fixed to the other part of the body or to the side board (2); and
a movement unit (12) for moving the insert (9) between the first position and the second position, which is mounted in the containment casing (3), which is accessible through the main opening (5) and which can be operated manually;
wherein when the insert (9) is in the first position the first connecting element (10) is positioned in its own locking position, and when the insert (9) is in the second position the first connecting element (10) is positioned in its own releasing position;
**characterised:**
**in that** the insert (9) comprises at least one first part (15) slidably guided in the containment casing (3) along the main axis of extension, the movement unit (12) being coupled to the first part (15);
**in that** the first connecting element (10) is movable relative to the first part (15) along a line of translation perpendicular to the main axis of extension, between a back position and a forward position;
**in that** it also comprises thrust means (16) acting on the first connecting element (10) for elastically pushing it towards the back position.

2. The fastener according to claim 1, **characterised in that** the insert (9) also comprises a second part (17) slidably coupled to the first part (15) according to said line of translation, **in that** the first connecting element (10) is mounted on the second part (17) and is fixed to it, and **in that** the sliding of the second part (17) relative to the first part (15) causes the shifting of the first connecting element (10) between the back position and the forward position.

3. The fastener according to claim 2, **characterised in that** the second part (17) is slidably coupled to the first part (15) with at least one undercut hooked coupling.

4. The fastener according to claim 2 or 3, **characterised in that** the thrust means (16) comprise a first stop element (20) positioned resting against an inner wall of the containment casing (3), and at least one thrust spring (21) positioned between the second part (17) and the first stop element (20).

5. The fastener according to claim 1, **characterised in that** the first part (15) comprises a guiding housing (23) extending along the line of translation, **in that** the first connecting element (10) comprises a base (24) slidably inserted in the guiding housing (23), and a head (25) projecting relative to the first part (15) and in use couplable to the second connecting element (11), and **in that** the thrust means (16) comprise at least one thrust spring (21) positioned between the base (24) and the first part (15) or the containment casing (3).

6. The fastener according to any one of claims 2 to 5, **characterised in that** the first part (15) is shaped in such a way that in all of its positions the containment casing (3) substantially prevents it from moving transversally to the main axis of extension.

7. The fastener according to any one of the preceding claims, **characterised in that** the thrust means (16) comprise at least two thrust springs (21) positioned in series and having different constants of elasticity.

8. The fastener according to any one of the preceding claims, **characterised in that** the secondary opening (7) is made in a second face (8) of the containment casing (3) parallel to the main axis of extension, **in that** in the forward position the first connecting element (10) projects from the second face (8) more than when it is in the back position, and **in that** the shifting of the first connecting element (10) between the locking position and the releasing position occurs by means of a translation along a line parallel to the second face (8).

9. The fastener according to any one of claims 1 to 7, **characterised in that** the secondary opening (7) extends substantially perpendicularly to the main axis of extension, **in that** in the locking position the first connecting element (10) projects from the secondary opening (7) more than when it is in the releasing position and **in that** the shifting of the first connecting element (10) between the forward position and the back position occurs by means of a translation along a line substantially parallel to a main plane of extension of the secondary opening (7).

10. A vehicle body comprising:
at least one openable side board (2), movable between a closed position and an open position, and equipped with an end element at a smaller side of it; and
a contact element fixed to a part of the body which is not the openable side board (2);
in the openable side board (2) closed position, the contact element being positioned or positionable adjacent to the end element of the openable side board (2);
**characterised in that** it comprises a fastener according to any one of the preceding claims which constitutes respectively the end element of the openable side board (2) or the contact element, **in that** respectively the contact element or the end element comprise said second connecting element (11), and **in that**, when the first connecting element (10) is coupled to the second connecting element (11), the thrust means (16) allow the shifting of the first connecting element (10) from the back position towards the forward position to allow the end element and the contact element to move away from each other following deformations of the vehicle body.

## Patentansprüche

1. Ein handbetätigter Verschluss für die Seitenwände von Fahrzeugkarosserien, Folgendes umfassend:
ein Gehäuse (3), das im Gebrauch an einer Seitenwand (2) einer Fahrzeugkarosserie oder an einem anderen Teil der Karosserie befestigt werden kann, wobei das Gehäuse (3) einen inneren Hohlraum (4) umfasst, der sich auf einer Haupterstreckungsachse ausdehnt, sowie eine Hauptöffnung (5), um Zugang zum inneren Hohlraum (4) zu haben, die auf einer ersten Seite (6) des Gehäuses (3) ausgespart ist, parallel zur Haupterstreckungsache und die im Gebrauch zur Außenseite der Karosserie gewandt ist, und eine Sekundäröffnung (7), um Zugang zum inneren Hohlraum (4) zu haben, die quer zur ersten Seite (6) angebracht ist;
einen Einsatz (9), der verschiebbar in das Gehäuse (3) eingesetzt ist und auf der Haupterstreckungsachse zwischen einer ersten Position und einer zweiten Position beweglich ist;
mindestens ein erstes Verbindungselement (10), das mit dem Einsatz (9) verbunden ist und zusammen mit ihm beweglich ist, das an der Sekundäröffnung (7) positioniert ist und im Gebrauch mit einem zweiten Verbindungelement (11) verbunden werden kann, das seinerseits am anderen Teil der Karosserie oder an der Seitenwand (2) befestigt ist; und
eine Bewegungseinheit (12), um den Einsatz (9) zwischen der ersten Position und der zweiten Position zu bewegen, die im Gehäuse (3) montiert ist, die durch die Hauptöffnung (5) zugänglich ist und die von Hand betätigt werden kann;
wobei, wenn der Einsatz (9) in der ersten Position ist, das erste Verbindungselement (10) in seiner eigenen verriegelten Position ist, und wenn der Einsatz (9) in der zweiten Position ist, das erste Verbindungselement (10) in seiner eigenen gelösten Position ist; gekennzeichet:
dadurch, dass der Einsatz (9) mindestens einen ersten Teil (15) umfasst, der verschiebbar im Gehäuse (3) auf der Haupterstreckungsachse geführt wird, wobei die Bewegungseinheit (12) mit dem ersten Teil (15) verbunden ist;
dadurch, dass das erste Verbindungselement (10) in Bezug auf den ersten Teil (15) auf einer Verschiebungslinie beweglich ist, die lotrecht zur Haupterstreckungsachse steht, zwischen einer hinteren Position und einer vorderen Position;
dadurch, dass er auch Schubmittel (16) umfasst, die auf das erste Verbindungelement (10) einwirken, um es elastisch zur hinteren Position zu schieben.

2. Der Verschluss nach dem Patentanspruch 1, **gekennzeichnet dadurch, dass** der Einsatz (9) auch einen zweiten Teil (17) umfasst, der verschiebbar mit dem ersten Teil (15) auf besagter Verschiebungslinie verbunden ist, dadurch, dass das erste Verbindungselement (10) am zweiten Teil (17) montiert ist und daran befestigt ist, und dadurch, dass das Verschieben des zweiten Teils (17) in Bezug zum ersten Teil (15) zur Verschiebung des ersten Verbindungselements (10) zwischen der hinteren Position und der vorderen Position führt.

3. Der Verschluss nach dem Patentanspruch 2, **gekennzeichnet dadurch, dass** der zweite Teil (17) mit mindestens einer unterschnittenen Hakenverbindung verschiebbar mit dem ersten Teil (15) verbunden ist.

4. Der Verschluss nach den Patentansprüchen 2 oder 3, **gekennzeichnet dadurch, dass** die Schubmittel (16) ein erstes Stopperelement (20) umfassen, das so positioniert ist, dass es an einer Innenwand des Gehäuses (3) angelehnt ist, und mindestens eine Schubfeder (21), die zwischen dem zweiten Teil (17) und dem ersten Stopperelement (20) positioniert ist.

5. Der Verschluss nach dem Patentanspruch 1, **gekennzeichnet dadurch, dass** der erste Teil (15) ein Führungsgehäuse (23) umfasst, das sich auf der Verschiebungslinie erstreckt, dadurch, dass das erste Verbindungselement (10) eine Basis (24) umfasst, die verschiebbar in das Führungsgehäuse (23) eingefügt ist, und einen Kopf (25) der in Bezug zum ersten Teil (15) hervorsteht und im Gebrauch mit dem zweiten Verbindungselement (11) verbindbar ist, und dadurch, dass die Schubmittel (16) zumindest eine Schubfeder (21) umfassen, die zwischen der Basis (24) und dem ersten Teil (15) oder dem Gehäuse (3) positioniert ist.

6. Der Verschluss nach jedem der Patentansprüche 2 bis 5, **gekennzeichnet dadurch, dass** der erste Teil (15) solcherart geformt ist, dass das Gehäuse (3) im Wesentlichen verhindert, dass er sich in allen seinen Positionen quer zur Haupterstreckungsachse bewegt.

7. Der Verschluss nach jedem der vorigen Patentansprüche, **gekennzeichnet dadurch, dass** die Schubmittel (16) mindestens zwei Schubfedern (21) umfassen, die seriell positioniert sind und unterschiedliche Elastizitätskonstanten haben.

8. Der Verschluss nach jedem der vorigen Patentansprüche, **gekennzeichnet dadurch, dass** die Sekundäröffnung (7) in einer zweiten Seite (8) des Gehäuses (3) parallel zur Haupterstreckungsachse ausgespart ist, dadurch, dass in der vorderen Position das erste Verbindungselement (10) weiter aus der zweiten Seite (8) hervorragt, als wenn es in der hinteren Position ist, und dadurch, dass die Verschiebung des ersten Verbindungselements (10) zwischen der verriegelten Position und der gelösten Position mittels einer Verschiebung auf einer Linie erfolgt, die parallel zur zweiten Seite (8) ist.

9. Der Verschluss nach jedem der Patentansprüche 1 bis 7, **gekennzeichnet dadurch, dass** sich die Sekundäröffnung (7) im Wesentlichen lotrecht zur Haupterstreckungsachse ausdehnt, dadurch, dass das erste Verbindungselement (10) in der verriegelten Position weiter aus der Sekundäröffnung (7) herausragt, als wenn es in der gelösten Position ist und dadurch, dass die Verschiebung des ersten Verbindungselements (10) zwischen der vorderen Position und der hinteren Position mittels einer Verschiebung auf einer Linie erfolgt, die im Wesentlichen parallel zu einer Haupterstreckungsebene der Sekundäröffnung (7) ist.

10. Eine Fahrzeugkarosserie, Folgendes umfassend:
mindestens eine Seitenwand (2), die geöffnet werden kann und die zwischen einer geschlossenen Position und einer geöffneten Position beweglich ist, und die mit einem Endelement an einer ihrer kleineren Seiten ausgestattet ist;
und ein Kontaktelement, das an einem Teil der Karosserie befestigt ist, der nicht die Seitenwand (2), die geöffnet werden kann, ist;
in der geschlossenen Position der Seitenwand (2), die geöffnet werden kann, ist das Kontaktelement dabei direkt neben dem Endelement der Seitenwand (2), die geöffnet werden kann, positioniert oder kann dort positioniert werden; **gekennzeichnet dadurch, dass** sie einen Verschluss nach jedem der vorigen Patentansprüche umfasst, der entweder das Endelement der Seitenwand (2), die geöffnet werden kann, oder das Kontaktelement darstellt, dadurch, dass das Kontaktelement beziehungsweise das Endelement besagtes zweites Verbindungselement (11) umfasst, und dadurch, dass, wenn das erste Verbindungselement (10) mit dem zweiten Verbindungselement (11) verbunden ist, die Schubmittel (16) die Verschiebung des ersten Verbindungselements (10) von der hinteren Position zur vorderen Position erlauben, um dem Endelement und dem Kontaktelement zu erlauben, sich voneinander fort zu bewegen und dabei Verformungen der Fahrzeugkarosserie zu folgen.

## Revendications

1. Une fixation à actionnement manuel pour les ridelles latérales de carrosseries de véhicules, comprenant :
un boîtier de logement (3) pouvant être fixé en utilisation à une ridelle latérale (2) d'une carrosserie de véhicule ou à une autre partie de la carrosserie, le corps de logement (3) comprenant une cavité intérieure (4) qui est allongée le long d'un axe principal d'extension et une ouverture principale (5) pour accéder à la cavité intérieure (4) qui est réalisée dans une première face (6) du boîtier de logement (3), parallèle à l'axe principal d'extension et qui en utilisation est orientée vers l'extérieur de la carrosserie, et une ouverture secondaire (7) pour accéder à la cavité intérieure (4) qui est positionnée transversalement par rapport à la première face (6) ;
un insert (9) inséré de façon coulissante dans le boîtier de logement (3), et mobile le long de l'axe principal d'extension entre une première position et une deuxième position ;
au moins un premier élément de raccordement (10) relié à l'insert (9), mobile avec celui-ci, positionné au niveau de l'ouverture secondaire (7), et pouvant être accouplé en utilisation avec un deuxième élément de raccordement (11) qui est respectivement fixé à l'autre partie de la carrosserie ou à la ridelle latérale (2) ; et
un groupe de manipulation (12) pour déplacer l'insert (9) entre la première position et la deuxième position, qui est monté dans le boîtier de logement (3), qui est accessible à travers l'ouverture principale (5) et qui peut être actionné manuellement ;
dans laquelle, quand l'insert (9) est dans la première position, le premier élément de raccordement (10) est positionné dans sa propre position de blocage, et, quand l'insert (9) est dans la deuxième position, le premier élément de raccordement (10) est positionné dans sa propre position de déblocage; **caractérisée :**
**en ce que** l'insert (9) comprend au moins une première partie (15) guidée de façon coulissante dans le boîtier de logement (3) le long de l'axe principal d'extension, le groupe de manipulation (12) étant accouplé avec la première partie (15) ;
**en ce que** le premier élément de raccordement (10) est mobile par rapport à la première partie (15) le long d'une ligne de translation perpendiculaire à l'axe principal d'extension, entre une position rentrée et une position avancée ;
**en ce qu'**elle comprend aussi des moyens de poussée (16) qui agissent sur le premier élément de raccordement (10) pour le pousser élastiquement vers la position rentrée.

2. La fixation selon la revendication 1, **caractérisée en ce que** l'insert (9) comprend aussi une deuxième partie (17) accouplée de façon coulissante avec la première partie (15) selon ladite ligne de translation, **en ce que** le premier élément de raccordement (10) est monté sur la deuxième partie (17) et est fixé à celle-ci, et **en ce que** le coulissement de la deuxième partie (17) par rapport à la première partie (15) détermine le déplacement du premier élément de raccordement (10) entre la position rentrée et la position avancée.

3. La fixation selon la revendication 2, **caractérisée en ce que** la deuxième partie (17) est accouplée de façon coulissante avec la première partie (15) par le biais d'au moins un couplage par crochet en contre-dépouille.

4. La fixation selon la revendication 2 ou 3, **caractérisée en ce que** les moyens de poussée (16) comprennent un premier élément d'arrêt (20) positionné en appui contre une paroi intérieure du boîtier de logement (3), et au moins un ressort de poussée (21) positionné entre la deuxième partie (17) et le premier élément d'arrêt (20).

5. La fixation selon la revendication 1, **caractérisée en ce que** la première partie (15) comprend un logement de guidage (23) s'étendant le long de la ligne de translation, **en ce que** le premier élément de raccordement (10) comprend une base (24) insérée de façon coulissante dans le logement de guidage (23), et une tête (25) en saillie par rapport à la première partie (15) et pouvant être accouplée en utilisation avec le deuxième élément de raccordement (11), et **en ce que** les moyens de poussée (16) comprennent au moins un ressort de poussée (21) positionné entre la base (24) et la première partie (15) ou le boîtier de logement (3).

6. La fixation selon l'une quelconque des revendications de 2 à 5, **caractérisée en ce que** la première partie (15) est profilée de manière à ce que dans toutes ses positions le boîtier de logement (3) l'empêche essentiellement de se déplacer transversalement par rapport à l'axe principal d'extension.

7. La fixation selon l'une quelconque des revendications précédentes, **caractérisée en ce que** les moyens de poussée (16) comprennent au moins deux ressorts de poussée (21) positionnés en série et ayant des constantes d'élasticité différentes.

8. La fixation selon l'une quelconque des revendications précédentes, **caractérisée en ce que** l'ouverture secondaire (7) est réalisée dans une deuxième face (8) du boîtier de logement (3) parallèle à l'axe principal d'extension, **en ce que** dans la position avancée le premier élément de raccordement (10) dépasse de la deuxième face (8) plus que lorsqu'il est dans la position rentrée, et **en ce que** le déplacement du premier élément de raccordement (10) entre la position de blocage et la position de déblocage a lieu par le biais d'une translation le long d'une direction parallèle à la deuxième face (8).

9. La fixation selon l'une quelconque des revendications de 1 à 7, **caractérisée en ce que** l'ouverture secondaire (7) s'étend essentiellement perpendiculairement à l'axe principal d'extension, **en ce que** dans la position de blocage le premier élément de raccordement (10) dépasse de l'ouverture secondaire (7) plus que lorsqu'il est dans la position de déblocage et **en ce que** le déplacement du premier élément de raccordement (10) entre la position avancée et la position rentrée a lieu par le biais d'une translation le long d'une direction essentiellement parallèle à un plan principal d'extension de l'ouverture secondaire (7).

10. Une carrosserie de véhicule comprenant :
au moins une ridelle latérale (2) ouvrable, mobile entre une position de fermeture et une position d'ouverture, et équipée d'un élément terminal au niveau d'un petit côté respectif ; et
un élément de contact fixé à une partie de la carrosserie qui n'est pas la ridelle latérale (2) ouvrable ;
dans la position de fermeture de la ridelle latérale (2) ouvrable, l'élément de contact étant positionné ou pouvant être positionné adjacent à l'élément terminal de la ridelle latérale (2) ouvrable ;
**caractérisée en ce qu'**elle comprend une fixation selon l'une quelconque des revendications précédentes qui constitue respectivement l'élément terminal de la ridelle latérale (2) ouvrable ou l'élément de contact, **en ce que** respectivement l'élément de contact ou l'élément terminal comprennent ledit deuxième élément de raccordement (11), et **en ce que**, lorsque le premier élément de raccordement (10) est accouplé avec le deuxième élément de raccordement (11), les moyens de poussée (16) permettent le déplacement du premier élément de raccordement (10) de la position rentrée vers la position avancée pour permettre à l'élément terminal et à l'élément de contact de s'éloigner l'un de l'autre suite à des déformations de la carrosserie de véhicule.
